# EUROPÄISCHE PATENTSCHRIFT

(11) **EP 1 470 393 B1**
(45) Veröffentlichungstag und Bekanntmachung des Hinweises auf die Patenterteilung: **19.06.2013**
(21) Anmeldenummer: 03704219.9
(22) Anmeldetag: 17.01.2003
(51) Int. Cl.: G01D 5/14, G01D 5/16, G01B 7/30

(54) **WEGSENSOR MIT MAGNETOELEKTRISCHEM WANDLERELEMENT**
PATH SENSOR WITH AN MAGNETOELECTRIC TRANSFORMER ELEMENT
CAPTEUR DE TRAJECTOIRE POURVU D'UN ELEMENT TRANSDUCTEUR MAGNETOELECTRIQUE

(30) Priorität: 23.01.2002 DE 10202318; 13.12.2002 DE 10258254
(43) Veröffentlichungstag der Anmeldung: 27.10.2004
(73) Patentinhaber: ROBERT BOSCH GMBH, 70442 Stuttgart (DE)
(72) Erfinder: BRAUN, Alexander, 75173 Pforzheim (DE); WELSCH, Wolfgang, 69120 Heidelberg (DE)
(86) Internationale Anmeldenummer: PCT/DE2003/000117
(87) Internationale Veröffentlichungsnummer: WO 2003/062741

(56) Entgegenhaltungen:
- EP-A- 0 325 787
- EP-A- 0 670 471
- US-A- 4 810 965

## Beschreibung

### Stand der Technik

Die Erfindung betrifft einen Wegsensor mit mindestens einem magnetoelektrischen Wandlerelement zur Erfassung der Bewegung eines Bauelements nach dem Oberbegriff des Hauptanspruchs.

Es ist bereits aus der DE 43 17 259 A1 eine Sensoranordnung für einen Drehwinkel bekannt, bei der ein Magnetflussgenerator zur Erzeugung eines messbaren Magnetflusses in einer elektrischen Steuereinrichtung angeordnet ist. Es sind hier magnetoelektrische Wandlerelemente vorhanden, mit denen eine Änderung des Magnetflusses, hervorgerufen durch die Drehbewegung eines magnetisch leitenden Körpers, erfassbar sind. Bei den bekannten magnetoelektrischen Wandlerelementen wird ein Messeffekt ausgenutzt, der dann entsteht, wenn die magnetische Flussdichte im Wandlerelemente in Abhängigkeit vom Winkel oder Weg verändert wird. Dies geschieht in der Regel dadurch, dass sich im Magnetkreis bestehend aus Flussleitstücken und Permanentmagnet, magnetisch leitende Flussleitstücke und der Permanentmagnet zueinander verdreht werden und sich somit die Flussdichte am Wandlerelement ändert. Diese Prinzipien führen dazu, dass sich unerwünschte Nebeneffekte z.B. aus den Lagerspielen der bewegten Teile ergeben, die ebenfalls durch eine Änderung der Luftspaltbreite die Felder im Wandlerelement und damit das Messergebnis verändern. Ferner sind die Baulängen der Wegsensoren oft erheblich größer als der zu messende Weg, was einen Einbau bei vielen Anwendungen erschwert. Aus der DE 197 53 775 A1 ist bekannt, dass bei einer solchen Messvorrichtung mit einem Hallelement als Wegsensor Flussleitstücke aus magnetisch leitendem Material zur Lenkung der Magnetflusslinien verwendet werden. Ferner beschreibt die EP 0 670 471 A1 eine Anordnung, bei der sich keinerlei Teile, die den Magnetkreis bilden, relativ zueinander bewegen. Hier wird somit der gesamte Magnetkreis über den magnetoelektrischen Wandler hinweggedreht. Der Messeffekt wird durch die Formgebung der Magnete erreicht, die eine definierte Luftspaltveränderung über den Drehwinkel aufweisen.

In der EP 0325787 A2 wird mit Hilfe eines Bauteils die Ausbreitung des Magnetfeldes zum Messelement hin beeinflusst, indem die Ausbreitung der Magnetlinien blockiert wird. Mit Hilfe der Randkrümmung wird hierbei die Dicke des Materials verstärkt und somit das Magnetfeld beeinflusst. Aufgrund des Bauteils geht aber Bauraum und somit Messstrecke verloren.

In der US 4,810,965 sind die Permanentmagneten stationär angeordnet. Gekrümmte Öffnungen des Messbereichs sind nicht zu entnehmen.

### Vorteile der Erfindung

Bei einer Weiterbildung eines Wegsensors zur Erfassung einer Bewegung nach der gattungsgemäßen Art mit einem magnetoelektrischem Wandlerelement und einem Magnetkreis wird gemäß der Erfindung in vorteilhafter Weise erreicht, dass die Flussleitstücke und das Wandlerelement, vorzugsweise ein Hallelement, sich während der Wegmessung zueinander in einer unveränderten Lage befinden, wobei diese Teile und der mindestens eine Magnet relativ zueinander bewegbar sind. Eine Veränderung des vom Wandlerelement auswertbaren Magnetfeldes wird in vorteilhafter Weise durch eine Veränderung des Luftspaltes im Magnetkreis während der Bewegung des Magneten bewirkt. Ein besonderer Vorteil der Erfindung ist hier die geringe Baulänge des Wegsensors, der damit auch an baulich kritischen Stellen an einem Aggregat oder bei sonstigen Anwendungen eingebaut werden kann. Gegenüber Verschiebungen des bewegten Magneten quer zur Bewegungsrichtung ist der erfindungsgemäße Wegsensor unempfindlich, da eine Vergrößerung einer Seite des Luftspaltes durch eine Verkleinerung der anderen Seite des Luftspaltes kompensiert wird. Eine Unempfindlichkeit in der anderen Richtung quer zur Erstreckung der Flussleitstücke kann auf einfache Weise durch eine entsprechende Dimensionierung der Komponentenhöhe erreicht werden, wobei die Flussleitstücke dann immer höher sind als der Magnet. In vorteilhafter Weise haben die Flussleitstücke des Magnetkreises eine solche die Bahn des Magneten einschließende Kontur, dass sich aufgrund der Änderung der Breite des Luftspaltes im Bahnverlauf ein vorgebbarer Signalverlauf im Wandlerelement ergibt. Das somit variable Magnetfeld wird hier weitgehend durch die Breite des Luftspaltes als Arbeitsspalt bestimmt und erlaubt auf einfache Weise eine variable Kennliniensteigung bis hin zu Winkeln oder Wegmessbereichen ohne Signalveränderungen, ein sogenanntes Plateau, oder zu gekrümmten Kennlinien. Vorzugsweise ist die Kontur der Flussleitstücke so geformt, dass sich eine lineare Messkurve im Bahnverlauf ergibt. Bei einer vorteilhaften Ausführungsform ist der Wegsensor ein Linearwegsensor und der Bahnverlauf der relativen Bewegung des Magnetkreises und des Wandlerelements ist eine Gerade. Hierbei ist die Baugröße nur geringfügig größer als der Messweg. Nach einer anderen vorteilhaften Ausführungsform ist der Sensor ein Winkel-sensor und der Bahnverlauf der relativen Bewegung des Magnetkreises und des Wändlerelements ist ein Kreis oder ein Kreisabschnitt. Vorteilhaft ist es außerdem, wenn die Flussleitstücke im Bereich des Wandlerelements zur Bewirkung einer Flusskonzentration jeweils einen zum Wandlerelement hinführenden Vorsprung als Polschuh aufweisen. Durch die damit vergrößerte Luftspaltbreite besteht die Möglichkeit größere Magnete bei geringerem Streufluss zu verwenden und damit mit mehr magnetischem Fluss zu arbeiten, wodurch die elektrische Signalverarbeitung erleichtert wird. Als Anwendungsgebiet des erfindungsgemäßen Wegsensors kommen unter anderen sogenannte Pedalweggeber für elektrohydraulische Bremsen in Kraftfahrzeugen in Betracht.

### Zeichnung

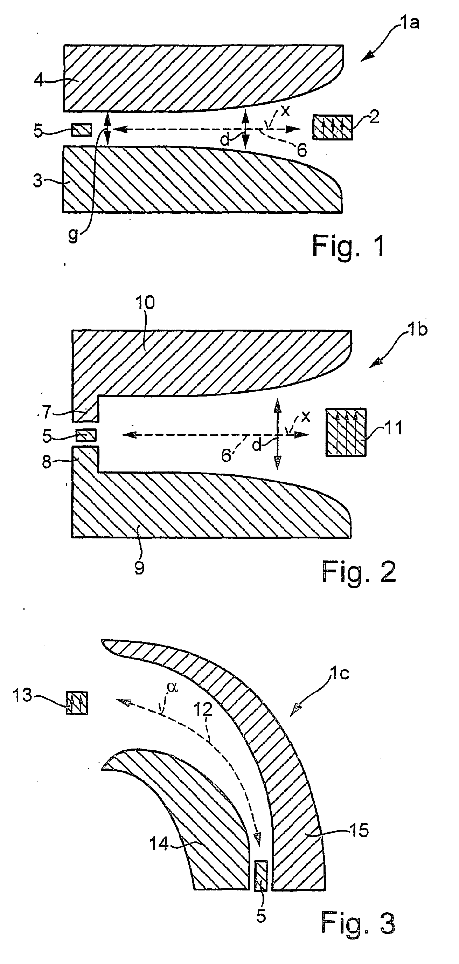

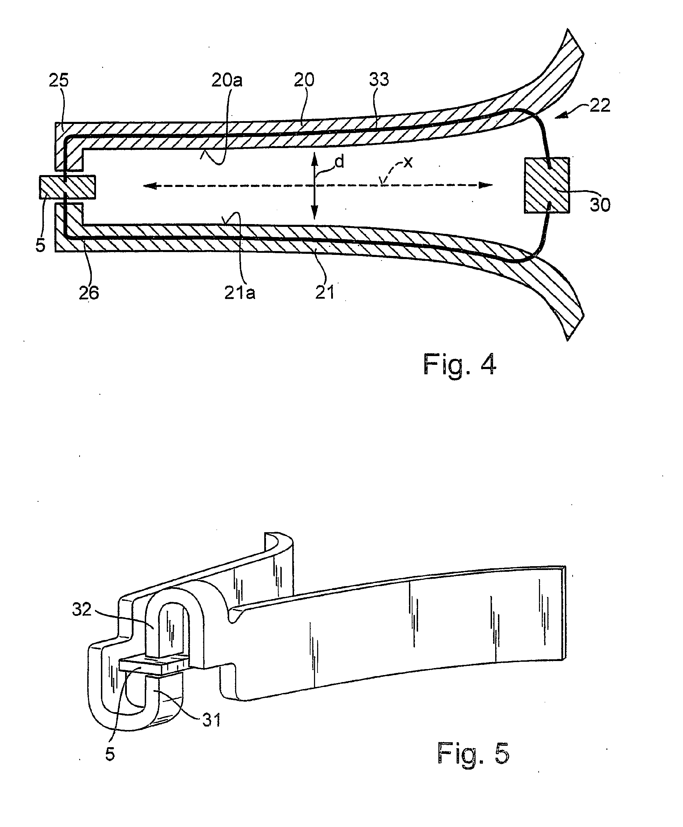

Ausführungsbeispiele werden anhand der Zeichnung erläutert. Es zeigen: Figur 1 einen Wegsensor für eine Linearwegmessung mit einer geeigneten Kontur der Flussleitstücke für einen linearen Signalverlauf, Figur 2 einen Wegsensor für eine Linearwegmessung mit jeweils einem dem Wandlerelement gegenüberliegenden Polschuhen an den Flussleitstücken, Figur 3 einen Wegsensor für eine radiale Wegmessung mit einer geeigneten Kontur der Flussleitstücke für einen linearen Signalverlauf, Figur 4 einen Wegsensor bei dem die Flussleitstücke konstante Dicke aufweisen, und Figur 5 ein Ausführungsbeispiel mit besonders geformten Polschuhen. Die Darstellungen in den Figuren 1 bis 3 dienen zur Erläuterung der Funktionsweise, und die Figuren 4 und 5 stellen die erfindungsgemäßen Ausführungen das,

In Figur 1 ist ein Linearwegsensor 1a dargestellt, der einem Magnetkreis bestehend aus einem Permanentmagneten 2 und zwei Flussleitstücke 3 und 4, beispielsweise aus Eisen, sowie ein zwischen den Enden der Flussleitstücke 3 und 4 im Messluftspalt g festsitzendes Hallelement 5 als elektromagnetischer Wandler aufweist. Der Magnet 2 ist auf einem Bahnverlauf 6 der Messtrecke x bewegbar, wobei durch eine geeignete Gestaltung der Kontur der Flussleitstücke 3 und 4 im Verlauf der Wegmessstrecke x ein Luftspalt mit einer veränderlichen Spaltbreite d erzeugt werden kann. Aufgrund der Änderung der Breite d im Bahnverlauf 6 ist ein durch die Kontur der Flussleitstücke 3 und 4 vorgebbarer Signalverlauf im Hallelement 5 sensierbar. In Figur 2 ist ein Ausführungsbeispiel eines Linearwegsensors 1b gezeigt, bei dem im Bahnverlauf entlang der Wegmesstrecke x eine größere Breite d des Luftspalts durch Polschuhe 7 und 8 erzeugt werden kann. Die Polschuhe 7 und 8 sind durch Vorsprünge an den Enden von Flussleitstücken 9 und 10 dem Hallelement 5 gegenüberliegend gebildet und wirken hier als Flusskonzentratoren. Bei diesem Ausführungsbeispiel kann somit ein längerer (d.h. in Richtung des Luftspalts) Magnet 11 angewendet werden, so dass sich hiermit eine größere Flussdichte bei geringerem Streufluss erzeugen lässt. Beim Ausführungsbeispiel nach Figur 3 beschreibt der Bahnverlauf 12 der Relativbewegung entlang der Messstrecke α abschnittsweise eine Kreisbahn, so dass sich hier ein Radialweg- oder Winkelsensor 1c ergibt. Der Magnetkreis ist mit einem Magneten 13 und entsprechenden Flussleitstücken 14 und 15 ausgestattet, deren Formgebung aber nach den anhand der Figur 1 erläuterten Prinzipien gestaltet sind. Das Messsignal ist ebenfalls mit einem fest zwischen den Enden der Flussleitstücke 14 und 15 angeordneten Hallelement 5 detektierbar.

Bei Bewegung des Magneten 2, 5, 11, 30 entlang dem Weg x ändert sich somit der magnetische Fluss im Messluftspalt g aufgrund der Änderung sowohl des Arbeitsluftspaltes d, als auch der Materialdicke der Flussleitstücke.

In dem Ausführungsbeispiel nach Figur 4 wird die Flussänderung im Messluftspalt g bei Bewegung des Magneten entlang x allein durch die kontinuierliche Krümmung der Flussleitstücke mit konstanter Dicke erreicht. In dem Ausführungsbeispiel nach Figur 4 weisen die Flussleitstücke 20, 21 über die gesamte Länge hin die gleiche Dicke auf. Dies gilt auch im sog. Öffnungsbereich 22 des Wegsensors. In den bisherigen Ausführuhgsbeispielen, insbesondere nach Figur 1 und 2 sind die Außenwände der Flussleitstücke 3, 4 bzw. 9, 10 über die gesamte Länge parallel verlaufend. Durch Verringerung der Baudicke dieser Flussleitstücke wurde dort im Inneren insbesondere im Öffnungsbereich ein kontinuierlich sich verändernder Abstand d in Richtung x erzeugt. In der Ausführung nach Figur 4 sind nun die Flussstücke 20, 21 voneinander weggebogen, d.h. ihre einander zugewandten Innenseiten 20a und 21a weisen eine gekrümmte Form auf, so dass sich im sog. Öffnungsbereich 22 ein maximaler Abstand d der Flussstücke 20, 21 ergibt. Die beschriebene variable Gestaltung der Kennlinie durch angepasste Krümmung der Flussleitstücke ist möglich. Unterschiedliche Steigungen, Plateaus, sprunghafte Übergänge für Schaltvorgänge können in einfacher Weise erzielt werden. Z.B. wird eine lineare Kennlinie erreicht, indem durch die Krümmung der Flussleitstücke die nicht lineare Abhängigkeit der magnetischen Flussdichte von der Spaltbreite d kompensiert wird. Die Verwendung von Polschuhen zur Flussleitkonzentration in Messluftspalt g und für den Einsatz größerer Magnete ist weiterhin möglich. Denkbar wäre auch, die in der Figur 4 dargestellte, gekrümmte, kontinuierlich verlaufende Form vor den Polschuhen 25, 26 in einen parallelen Bereich übergehen zu lassen. Dieser parallele Bereich sollte dann zumindest die Länge des Magneten 30 aufweisen, um hierdurch eine Endposition signalisieren zu können. Zwischen den beiden Polschuhen 25, 26 befindet sich das Hallelement 5. Es ist aber auch eine Ausbildung ohne Polschuhe denkbar, wie es in Figur 1 dargestellt ist. Die Polschuhe 25, 26 haben die Aufgabe einer Konzentration des Magnetflusses zum Hallelement hin. Die Polschuhe 25, 26 können hierbei die gleiche Dicke wie die Flussleitteile 20, 21 aufweisen. In der Figur 4 ist mit der Bezifferung 33 der Verlauf des Magnetflusses des Magneten 30 eingezeichnet. Die Polarität des Magneten entspricht der in der vorgegebenen Darstellung. Wird der Magnet 30 in Richtung x bewegt, so verändert sich der Abstand d zwischen den Flussleitteilen 20, 21. Diese Abstandsänderung sorgt für eine Magnetfeldänderung im Hallelement, die proportional zur Verschiebung x ist. Die Abbildung nach Figur 4 hat insbesondere die Vorteile, dass solche Flussleitstücke durch einfache Herstellungsprozesse, z.B. Stanzen und Biegen, fertigbar sind. Es können dadurch Flussleitteile großer Höhe ohne zerspannende Prozesse hergestellt werden. Dies führt zu einem materialsparenden Design. Ein weiterer Vorteil besteht bei der Ausführung des Messluftspaltes g darin, dass dort Formen gestaltbar sind, die es erlauben, Hallelemente in verschiedensten Gehäuseformen, insbesondere wie sie in der Großserienfertigung für Leiterplatten üblich sind, einzusetzen. Ein Beispiel hierfür zeigt die Figur 5. Hier sind die Enden der Flussleitstücke 20, 21 teilweise aufgestanzt und die verbleibenden Bereiche 31, 32 sind hufeisenförmig gebogen. Zwischen den Stirnseiten der Bereiche 31, 32 befindet sich der Messluftspalt g und das Hallelement 5. Die Enden der Flussleitstücke können beliebig geformt sein, so dass die magnetische Flussdichte in beliebiger Richtung zum Messweg x orientiert sein kann. Dies resultiert sowohl in einer Konzentration der magnetischen Flussdichte im Messluftspalt g als auch in einer größeren Freiheit bei der Integration des Sensors in andere Module, z.B. in die Betätigungseinheit bei der elektrohydraulischen Bremse.

## Patentansprüche

1. Wegsensor mit mindestens einem magnetoelektrischem Wandlerelement (5) und einem Magnetkreis aus mindestens zwei Flussleitstücken (3,4;9,10;14,15,20,21) und mindestens einem Magneten (2;11,30), bei dem durch die Bewegung eines Elements eine mit dem mindestens einen Wandlerelement (5) messbare Beeinflussung des Magnetflusses bewirkt wird, wobei die mindestens zwei Flussleitstücke (3,4;9,10;14,15,20,21) und das mindestens eine Wandlerelement (5) sich während der Wegmessung zueinander in einer unveränderten Lage befinden, wobei die mindestens zwei Flussleitstücke (3,4,5;9,10;14,15,20,21) und der mindestens eine Magnet (2;11,30) relativ zueinander bewegbar sind und dass eine Veränderung des vom mindestens einen Wandlerelement (5) auswertbaren Magnetfeldes durch eine Veränderung der Breite des Luftspaltes (d) im Magnetkreis während der Bewegung des mindestens einen Magneten (2;11,30) bewirkbar ist und wobei die mindestens zwei Flussleitstücke (20, 21) eine nahezu konstante Wanddicke aufweisen **dadurch gekennzeichnet, daß** die mindestens zwei Flussleitstücke (20, 21) zumindest im Öffnungsbereich (22), der den maximalen Abstand (d) der mindestens zwei Flussleitstücke (20, 21) hat, eine Kurvenform aufweisen.

2. Wegsensor nach Anspruch 1, **dadurch gekennzeichnet, dass** die Innenseiten (20a, 21a) der mindestens zwei Flussleitstücke (20, 21) eine kontinuierlich verlaufende, gekrümmte Form aufweisen.

3. Wegsensor nach Anspruch 1, **dadurch gekennzeichnet, dass** die Innenseiten (20a, 21a) der mindestens zwei Flussleitstücke (20, 21) zumindest einen parallel zueinander verlaufenden Abschnitt aufweisen.

4. Wegsensor nach einem der vorhergehenden Ansprüche, **dadurch gekennzeichnet, dass** der Wegsensor ein Linearwegsensor (1a;1b) ist und der Bahnverlauf (6) der relativen Bewegung des mindestens einen Wandlerelements (5), der mindestens zwei Flussleitstücke (3,4;9,10,20,21) und des mindestens einen Magneten (2;11,30) eine Gerade ist.

5. Wegsensor nach einem der Ansprüche 1 bis 3, **dadurch gekennzeichnet, dass** der Wegsensor ein Winkelsensor (1c) ist und der Bahnverlauf (12) der relativen Bewegung des mindestens einen Wandlerelements (5), der mindestens zwei Flussleitstücke (14,15) und des mindestens einen Magneten (2) ein Kreis oder ein Kreisabschnitt ist.

6. Wegsensor nach einem der vorhergehenden Ansprüche, **dadurch gekennzeichnet, dass** die mindestens zwei Flussleitstücke (3,4;9,10,20,21) im Bereich des mindestens einen Wandlerelements (5) jeweils einen zum mindestens einen Wandlerelement (5) hinführenden Vorsprung (7,8) als Flusskonzentrator aufweisen.

7. Wegsensor nach einem der vorhergehenden Ansprüche, **dadurch gekennzeichnet, dass** das mindestens eine Wandlerelement ein Hallelement (5) ist.

## Claims

1. Travel sensor having at least one magnetoelectric converter element (5) and a magnetic circuit comprising at least two flux-conducting pieces (3, 4; 9, 10; 14, 15, 20, 21) and at least one magnet (2; 11, 30) in which the magnetic flux is influenced, such that it can be measured by the at least one converter element (5), by the movement of an element, wherein the at least two flux-conducting pieces (3, 4; 9, 10; 14, 15, 20, 21) and the at least one converter element (5) are located in an invariable position in relation to one another during travel measurement, wherein the at least two flux-conducting pieces (3, 4; 9, 10; 14, 15, 20, 21) and the at least one magnet (2; 11, 30) can be moved relative to one another, and wherein the magnetic field, which can be evaluated by the at least one converter element (5), can be changed by changing the width of the air gap (d) in the magnetic circuit during the movement of the at least one magnet (2; 11, 30), and wherein the at least two flux-conducting pieces (20, 21) have a virtually constant wall thickness, **characterized in that** the at least two flux-conducting pieces (20, 21) have a curved shape at least in the opening region (22) which is at the maximum distance (d) from the at least two flux-conducting pieces (20, 21).

2. Travel sensor according to Claim 1, **characterized in that** the inner faces (20a, 21a) of the at least two flux-conducting pieces (20, 21) have a continuously running, curved shape.

3. Travel sensor according to Claim 1, **characterized in that** the inner faces (20a, 21a) of the at least two flux-conducting pieces (20, 21) have at least one section, which sections run parallel to one another.

4. Travel sensor according to one of the preceding claims, **characterized in that** the travel sensor is a linear travel sensor (1a; 1b) and the path profile (6) of the relative movement of the at least one converter element (5), the at least two flux-conducting pieces (3, 4; 9, 10, 20, 21) and the at least one magnet (2; 11, 30) is a straight line.

5. Travel sensor according to one of Claims 1 to 3, **characterized in that** the travel sensor is an angle sensor (1c) and the path profile (12) of the relative movement of the at least one converter element (5), the at least two flux-conducting pieces (14, 15) and the at least one magnet (2) is a circle or a section of a circle.

6. Travel sensor according to one of the preceding claims, **characterized in that** the at least two flux-conducting pieces (3, 4; 9, 10, 20, 21) each have a projection (7, 8), which leads to the at least one converter element (5), as flux concentrators in the region of the at least one converter element (5).

7. Travel sensor according to one of the preceding claims, **characterized in that** the at least one converter element is a Hall element (5).

## Revendications

1. Capteur de trajectoire doté d'au moins un élément transducteur magnétoélectrique (5) et d'un circuit magnétique composé d'au moins deux pièces conductrices de flux (3, 4 ; 9, 10 ; 14, 15, 20, 21) et d'au moins un aimant (2 ; 11, 30), dans lequel une influence du flux magnétique mesurable à l'aide d'au moins un élément transducteur (5) est provoquée par le déplacement d'un élément, les au moins deux pièces conductrices de flux (3, 4 ; 9, 10 ; 14, 15, 20, 21) et l'au moins un élément transducteur (5) se trouvant dans une position non modifiée les uns par rapport aux autres pendant la mesure de trajectoire, les au moins deux pièces conductrices de flux (3, 4 ; 9, 10 ; 14, 15, 20, 21) et l'au moins un aimant (2 ; 11, 30) pouvant être déplacés les uns par rapport aux autres et une variation du champ magnétique pouvant être analysée par au moins un élément transducteur (5) pouvant être provoquée par une variation de la largeur de l'interstice d'air (d) prévu dans le circuit magnétique pendant le déplacement de l'au moins un aimant (2 ; 11, 30) et les au moins deux pièces conductrices de flux (20, 21) présentant une épaisseur de paroi quasi constante, **caractérisé en ce qu'**au moins deux pièces conductrices de flux (20, 21) comportent, au moins dans la région d'ouverture (22), la distance (d) maximale des au moins deux pièces conductrices de flux (20, 21) prenant une forme courbe.

2. Capteur de trajectoire selon la revendication 1, **caractérisé en ce que** les côtés intérieurs (20a, 21a) des au moins deux pièces conductrices de flux (20, 21) présentent une forme incurvée s'étendant en continu.

3. Capteur de trajectoire selon la revendication 1, **caractérisé en ce que** les côtés intérieurs (20a, 21a) des au moins deux pièces conductrices de flux (20, 21) comportent au moins une section s'étendant parallèlement à eux.

4. Capteur de trajectoire selon l'une quelconque des revendications précédentes, **caractérisé en ce que** le capteur de trajectoire est un capteur de trajectoire linéaire (1a ; 1b) et que la trajectoire de voe (6) du déplacement relatif de l'au moins un élément transducteur (5), des au moins deux pièces conductrices de flux (3, 4 ; 9, 10, 20, 21) et de l'au moins un aimant (2 ; 11, 30) est une droite.

5. Capteur de trajectoire selon l'une quelconque des revendications 1 à 3, **caractérisé en ce que** le capteur de trajectoire est un capteur d'angle (1c) et que la trajectoire (12) du déplacement relatif de l'au moins un élément transducteur (5), des au moins deux pièces conductrices de flux (14,15) et de l'au moins un aimant (2) est un cercle ou une section de cercle.

6. Capteur de trajectoire selon l'une quelconque des revendications précédentes, **caractérisé en ce que** les au moins deux pièces conductrices de flux (3, 4 ; 9, 10, 20, 21) comportent respectivement dans la région de l'au moins un élément transducteur (5) une saillie (7, 8) à introduire jusqu'à au moins un élément transducteur (5) et prenant la forme d'un concentrateur de flux.

7. Capteur de trajectoire selon l'une quelconque des revendications précédentes, **caractérisé en ce que** l'au moins un élément transducteur est un élément à effet de Hall (5).
